# EUROPÄISCHE PATENTSCHRIFT

(11) **EP 1 371 955 B1**
(45) Veröffentlichungstag und Bekanntmachung des Hinweises auf die Patenterteilung: **14.06.2006**
(21) Anmeldenummer: 02100713.3
(22) Anmeldetag: 14.06.2002
(51) Int. Cl.: G01G 23/00, G06F 9/44, G05B 19/042, G01G 11/08

(54) **Objektorientiertes Verfahren, System und Software für eine gravimetrisches Messinstrument**
Object-oriented method, system and software for a gravimetric measuring device
Procédé, système et programme pour un dispositif de mesure gravimétrique, utilisant une technologie orientée objet

(43) Veröffentlichungstag der Anmeldung: 17.12.2003
(73) Patentinhaber: Mettler-Toledo GmbH, 8606 Greifensee (CH)
(72) Erfinder: Steinrisser, Markus, 8708 Männedorf (CH); Gluvakow, Siegfried, 8608 Bubikon (CH)

(56) Entgegenhaltungen:
- WO-A-95/32476
- US-A- 4 953 075
- PICHLIK H: "BILDER-CODE GRAFISCHE PROGRAMMIERUMGEBUNG NATIONAL INSTRUMENTS LABVIEW 6.I" CT MAGAZIN FUER COMPUTER TECHNIK, VERLAG HEINZ HEISE GMBH., HANNOVER, DE, Nr. 3, 29. Januar 2001 (2001-01-29), Seite 88 XP000987432 ISSN: 0724-8679
- MAYR M: "PROGRAMMIEREN: EINFACHER GEHT'S NICHT" TECHNISCHE RUNDSCHAU, HALLWAG VERLAG. BERN, CH, Bd. 89, Nr. 10, 7. März 1997 (1997-03-07), Seiten 22-26, XP000691506 ISSN: 1023-0823
- Press Release Labtronics:"Balance Automation Software meets 21 CFR Part 11 requirements" XP002221878

## Beschreibung

Die Erfindung bezieht sich auf gravimetrische Messinstrumente und Systeme mit einem gravimetrischen Messinstrument sowie die Erstellung von Anwendungsprogrammen zur Ausführung durch ein gravimetrisches Messinstrument. Insbesondere betroffen sind elektronische waagen, die über einen Netzwerkanschluss mit einem Netzwerk und einem Computer verbunden werden oder direkt via serielle Schnittstelle, USB oder Funkverbindung mit einem Rechner in verbindung stehen können.

Normalerweise sind Waagen, wie sie in Forschung, Entwicklung oder Produktion eingesetzt werden, als eigenständige Geräte ausgeführt, die lediglich eine Spannungsversorgung brauchen, um eingesetzt werden zu können.

Es gibt elektronische waagen, die eine Netzwerk-Schnittstelle aufweisen und in einem Netzwerkverbund betrieben werden können. Üblicherweise ist die waage für diesen zweck mit einer einfachen RS-232-Schnittstelle ausgestattet. Die Möglichkeiten, die sich durch einen Netzwerkanschluss anbieten, sind bei weitem nicht ausgeschöpft. Es werden momentan Anwendungen entwickelt, die vermehrt von dem Netzwerkanschluss Gebrauch machen.

Es gibt zahlreiche verfahrensabläufe in Laboratorien und insbesondere auch in der industriellen Fertigung, die eine genaue Reproduzierbarkeit aller Verfahrensschritte erfordern. Hierzu ist eine genaue und unveränderbare Dokumentation zwingend notwendig. Zahlreiche Institutionen und Firmen haben entweder eigene Regeln (zum Beispiel "Standard Operating Procedures" genannt) zur Festlegung und Protokollierung der verfahrensabläufe in ihren Laboratorien oder in ihrer Fertigung erstellt, oder sie verwenden Regelsätze, die zum Beispiel in Form von Standards oder gesetzlichen vorschriften festgelegt worden sind.

Ein Beispiel für eine software-basierte Lösung, die das Erstellen von "Standard Operating Procedures" (SOP) unterstützt, ist in der europäischen Patentanmeldung EP 1286141A mit Titel "Programmierbare Vorrichtung mit einem gravimetrischen Messinstrument, verfahren zum Programmieren einer solchen vorrichtung und Software zum Durchführen des verfahrens" beschrieben. Diese Anmeldung wurde am 18.01.2002 im Namen der Firma Mettler Toledo GmbH eingereicht.

Ein weiteres Beispiel einer Software, die es ermöglicht gewisse SOPs zu definieren, ist das Balance Data System (BDS) der Firma Labtronics Inc., in Kanada. Es handelt sich dabei um eine Software, welche die Benutzung von waagen unterstützt und vereinfacht. Die Software führt den Benützer durch den Prozess und stellt sicher, dass die SOPS eingehalten werden. Details zu BDS sind zum Beispiel in der Broschüre "BDS Balance Data System" der Labtronics Inc., zum zeitpunkt der Anmeldung unter http://www.balanceinfo.com/bds.htm anforderbar, zu finden. Dem BDS haftet aber der Nachteil an, dass ständig eine Datenkommunikation zwischen dem Computer, auf welchem das BDS installiert ist, und dem gravimetrischen Messinstrument möglich sein muss; alternativ kann mit dem Messinstrument ein einfacheres Gerät wie etwa ein PDA verbunden sein, auf dem ein minimaler Teil des BDS installiert ist und das als zwischenspeicher der Daten dient, welch letztere dann auf anderem weg dem BDS-Computer zugeführt werden. Das BDS erlaubt nur die Definition und Abarbeitung eines geschlossenen sequentiellen Ablaufs und ist somit wenig flexibel. Je nach Konfiguration und Applikation muss der Benutzer wechselnd Eingaben am Computer und an der Waage tätigen, was hinderlich ist.

Die in US4953075 A offenbarte Erfindung ist ein Kontrollsystem für eine Probenvorbereitungs/vorrichtung welche automatisiert ist und dem Benutzer erlaubt, eigene Probenvorbereitungsprozeduren zu programmieren, beziehungsweise vorprogrammierte Prozeduren zu verwenden. Des weiteren erlaubt das Kontrollsystem, dass der Benutzer als Systemmanager die benötigten Prozeduren definieren und gegebenenfalls ändern kann. Die in dieser Schrift aufgeführte waage ist ein zusätzliches Messinstrument zur Erfassung des Probengewichts. Die Schnittstelle zwischen waage und Kontrollsystem dient lediglich dazu, den Gewichtswert der Probe direkt an das Kontrollsystem zu übermitteln um diesen nicht manuell eingeben zu müssen. Das Programm wird aber nicht in die waage eingespeichert, nicht ausgeführt und umgesetzt.

Im Artikel von H. Pichlik "Bilder- Code grafische Programmierumgebung national instruments labview 6.i" CT Magazin für Computer Technik, Verlag Heinz Heise GmbH, Hannover, DE Nr3, 29.01.2001, Seite 88, wird eine Entwicklungssoftware (Labview) beschrieben. Mit dieser Entwicklungssoftware werden Programme grafisch datenflussorientiert mit Hilfe von Ikons und Drähten erstellt. Die beschriebene Software stellt eine grafische Programmierumgebung zur verfügung wobei das grafisch programmierte Programm anschliessend in maschinenlesbaren Code umgesetzt wird. An Stelle von Befehlen und Operatoren werden Ikons und verbindungsdrähte eingesetzt, die auf Grund ihrer grafischen Darstellung leicht verständlich sind und das erlernen einer komplizierten Programmiersprache erübrigen.

Insbesondere in dem Pharmazie-, Nahrungs-, und Chemiebereich, aber auch im Medizinalwesen und Gesundheitsbereich ist die Einhaltung vorgegebener Abläufe und Regeln wichtig. Unter umständen ist zum Beispiel die zulassung eines Medikaments, oder die zertifizierung industrieller Abläufe davon abhängig, ob die entsprechende Institution oder Firma in der Lage ist, die Einhaltung vorgegebener Abläufe und Regeln zu gewährleisten. Aspekte, die in diesem zusammenhang eine Rolle spielen sind: Use Management (z.B. die Zuweisung von Benutzungsrechten), Zugangssicherheit, Identifizierung und Authentifikation von Benutzern, Audit-Trail (z.B. in Form einer Aufzeichnung aller relevanten Schritte); Change Management (z.B. in Form einer Aufzeichnung aller Änderungen); zentrale Datenablage, um einige Beispiele zu geben.

Ein bekanntes Beispiel ist der sogenannte Code of Federal Regulations (CFR) 21, Part 11, der in den USA und anderen Ländern vermehrt befolgt wird.

Es gibt zum Beispiel sogenannte "Laboratory Information Management Systeme" (LIMS), die es ermöglichen sämtliche Schritte und Handhabungen genauestens zu dokumentieren.

Es ist eine Aufgabe der vorliegenden Erfindung, einen Ansatz anzubieten, der es erlaubt ein Anwendungsprogramm für Waagen und andere gravimetrische Messinstrumente zu erstellen und zu prüfen, ob eine solche Anwendung regelkonform ist.

Es ist eine weitere Aufgabe der Erfindung, Waagen und andere gravimetrische Messinstrumente bereitzustellen, die in der Lage sind ein Anwendungsprogramm regelkonform auszuführen.

Es ist eine weitere Aufgabe der Erfindung eine entsprechende Software und ein Gesamtsystem bereit zu stellen.

Diese Aufgaben werden erfindungsgemäss durch ein Verfahren nach Anspruch 1, ein System nach Anspruch 13, ein System mit einem entsprechend gestalteten gravimetrischen Messinstrument nach Anspruch 25 und eine Software nach Anspruch 31 gelöst.

Verschiedene vorteilhafte Ausführungsformen sind in den abhängigen Ansprüchen aufgeführt.

Die verschiedenen Vorteile der Erfindung sind entweder in der Beschreibung erwähnt oder ergeben sich aus dieser.

Einzelheiten und vorteile der Erfindung werden im Folgenden an Hand verschiedener Ausführungsbeispiele und mit Bezug auf die Zeichnungen, die einen integralen Bestandteil der Offenbarung der vorliegenden Erfindung bilden, ausführlich beschrieben. Hierbei zeigen gemäss Erfindung:
- Fig. 1: eine schematische Darstellung eines ersten Gesamtsystems, gemäss Erfindung;
- Fig. 2A-2B: ein schematisches Flussdiagramm eines ersten Verfahrens, gemäss Erfindung;
- Fig. 3: eine schematische Darstellung einer Eingabemaske mit Arbeitsfläche, gemäss Erfindung;
- Fig. 4A-4C: schematische Darstellungen der Arbeitsfläche nach Fig. 3, gemäss Erfindung;
- Fig. 5: eine schematische Darstellung eines Verfahrensaspekts, gemäss Erfindung;
- Fig. 6: eine schematische Darstellung eines Regelsatzes, gemäss Erfindung;
- Fig. 7: eine schematische Darstellung eines zweiten Gesamtsystems, gemäss Erfindung;

Die Erfindung kann auf verschiedenste Messgeräte zur Massebestimmung, insbesondere auf Laborinstrumente mit mindestens einem gravimetrischen Messinstrument (z.B. in Form einer wägezelle) angewendet werden. Dazu gehören unter anderem Trockner und Komparatoren, aber auch andere Instrumente, wie etwa Wägemodule in Produktionsstrassen. Der Einfachheit halber wird die Erfindung im Folgenden hauptsächlich im Zusammenhang mit elektronischen Waagen beschrieben, wobei dies nicht als Einschränkung zu verstehen ist.

Unter dem Begriff Anwendungsprogramm ist eine Darstellungsform zu verstehen, welche einen oder mehrere Verfahrensschritte bzw. Aktionen beschreibt, die durch ein gravimetrisches Messinstrument (zum Beispiel eine elektronische Waage) ausführbar sind. Es kommt dabei nicht darauf an, in welcher Sprache die Verfahrensschritte definiert sind. Die Verfahrensschritte können zum Beispiel in einer Skriptform beschrieben sein, die dann vor dem Abarbeiten durch die Waage umgewandelt wird in eine Art Maschinensprache oder dergleichen. Die umwandlung kann aber auch im Rahmen einer Validierung erfolgen.

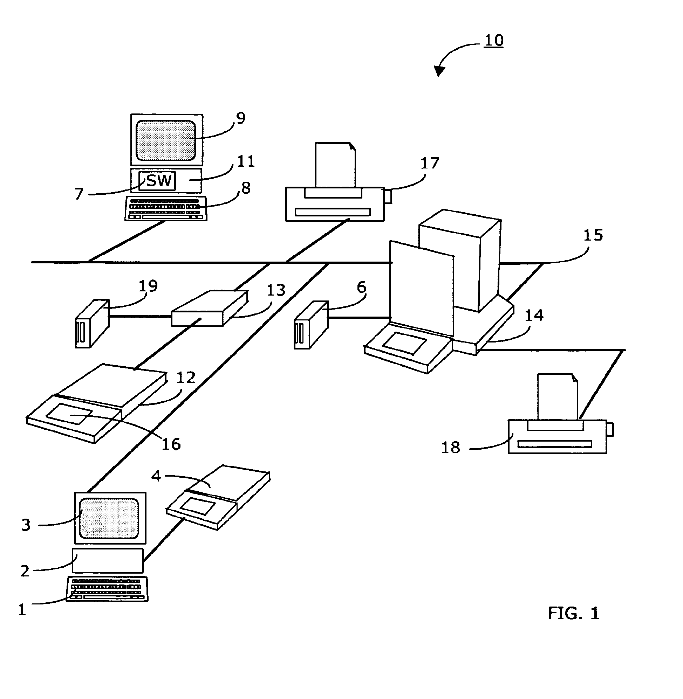

Eine erste Ausführungsform der Erfindung ist der schematischen Darstellung in Figur 1 zu entnehmen. Es ist ein (Gesamt)System 10 gezeigt, das drei elektronische waagen 4, 12 und 14 (z.B. Analysewaagen, Präzisionswaagen, Komparatorwaagen, Mikrowaagen, oder dergleichen) aufweist. Die waage 12 ist über ein externes Netzwerk-Interface 13 mit einem Netzwerk 15 und einem Computer 11 verbunden. Die Waage 14 besitzt ein eingebautes Netzwerk-Interface (in Figur 1 nicht gezeigt), das ähnlich wie das Netzwerk-Interface 13 aufgebaut sein kann. Die waage 4 ist über einen Computer 2, der ein eingebautes Netzwerk-Interface hat, mit dem Netzwerk 15 verbunden. Der Computer 2 hat in dem gezeigten Beispiel eine Anzeige 3 in Form eines Bildschirms und eine Eingabeeinheit 1 in Form einer Tastatur. Die Waage 12 ist über das Netzwerk-Interface 13 mit einem Barcode-Scanner 19 verbunden. Die Waage 14 steht direkt mit einem Barcode-Scanner 6 in Verbindung. Der Computer 11, die Waagen 4, 12, 14, und die Netzwerk-Interfaces sind so ausgeführt, dass eine Kommunikationsverbindung zwischen den Waagen 4, 12, 14 und dem Computer 11 aufbaubar ist. Der Computer 11 hat in dem gezeigten Beispiel eine Anzeige 9 in Form eines Bildschirms und eine Eingabeeinheit 8 in Form einer Tastatur.

Auf dem Computer 11 ist ein Softwaremodul 7 ausführbar. Zu diesem zweck kann entweder ein Standardbetriebssystem oder ein spezielles Betriebssystem vorhanden sein. Die erwähnten Netzwerk-Interfaces sind so ausgeführt, dass sie in der Lage sind, ein Anwendungsprogramm über das Netzwerk 15 zu empfangen und den waagen 4 und/oder 12 und/oder 14 bereit zu stellen. Dieses Anwendungsprogramm wird von dem Computer 11 an das Netzwerk-Interface übertragen, bzw. am Computer 11 abgeholt.

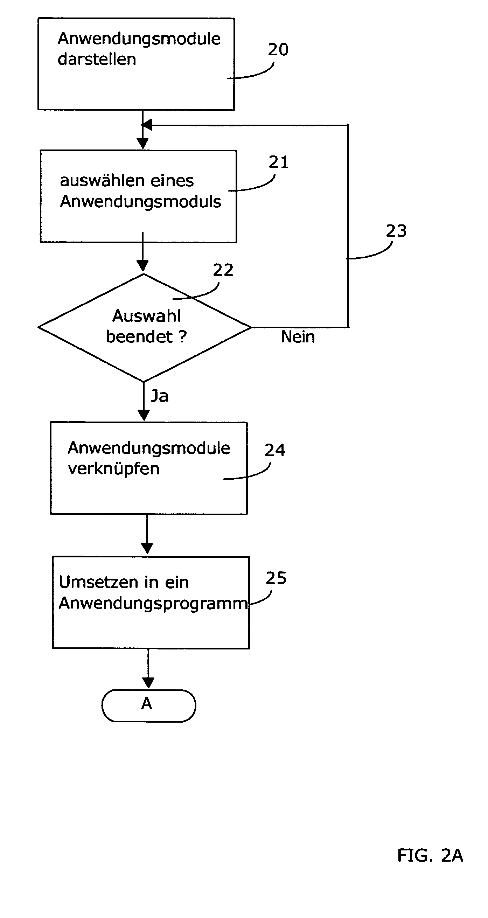

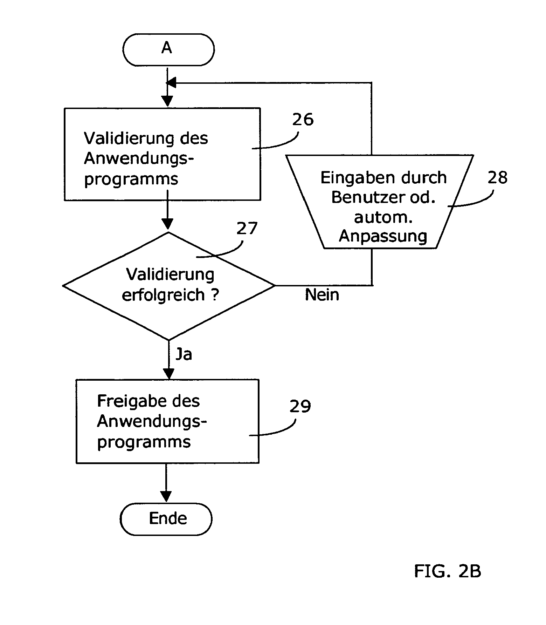

In dem beschriebenen System 10 kann gemäss Erfindung das folgende verfahren zum computerunterstützten Erstellen eines Anwendungsprogramms ausgeführt werden. Die Verfahrensschritte sind als schematisches Flussdiagramm in den Figuren 2A und 2B gezeigt. Das Softwaremodul 7 wird zu diesem Zweck gestartet und von dem Computer 11 ausgeführt. Das Verfahren weist die folgenden Schritte auf:
(1) Darstellen mehrerer Anwendungsmodule (Block 20, Figur 2A) auf der Anzeigevorrichtung 9, bevorzugt in Form grafischer Elemente.
(2) Auswählen eines ersten Anwendungsmoduls (Block 21, Figur 2A) mittels der Eingabevorrichtung 8.
(3) Auswählen eines weiteren Anwendungsmoduls (Block 21, Figur 2A) mittels der Eingabevorrichtung 8. Diese Auswahl kann mehrfach wiederholt werden, wie in Figur 2A durch die Box 22 in Kombination mit der Schleife 23 dargestellt.
(4) verknüpfen des ersten Anwendungsmoduls mit dem zweiten Anwendungsmodul (Block 24, Figur 2A) und mit weiteren Anwendungsmodulen, soweit vorhanden. Die verknüpfung kann zum Beispiel mittels der Eingabevorrichtung 8 erfolgen und legt die zeitliche Abfolge des ersten Anwendungsmoduls, des zweiten Anwendungsmoduls und weiterer Anwendungsmodule, soweit vorhanden, fest.
(5) Umsetzen (Block 25, Figur 2A) der ausgewählten Anwendungsmodule und der Verknüpfung(en) in ein unvalidiertes Anwendungsprogramm. Das Umsetzen wird durch den Computer 11 mit Unterstützung des Softwaremoduls 7 vorgenommen.

In einem nachfolgenden Block von Schritten (in Figur 2B dargestellt) erfolgt nun eine computerunterstützte validierung des unvalidierten Anwendungsprogramms (Block 26, Figur 2B), wobei bei der Validierung ein vorgegebener Regelsatz zur Anwendung kommt. Gemäss Erfindung wird das Anwendungsprogramm (nur) zur Benutzung freigegeben (Block 29, Figur 2B), falls diese validierung erfolgreich abgeschlossen wurde (Block 27, Figur 2B). Andernfalls erfolgt eine computerunterstützte Anpassung des Anwendungsprogramms (Block 28, Figur 2B), wobei anschliessend eine erneute computerunterstützte validierung (Block 26, Figur 2B) ausgeführt wird.

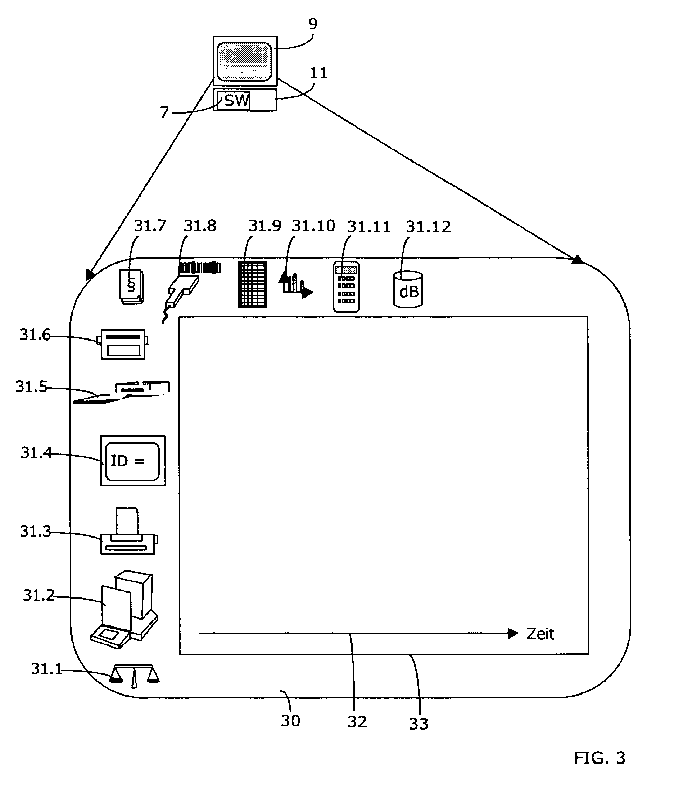

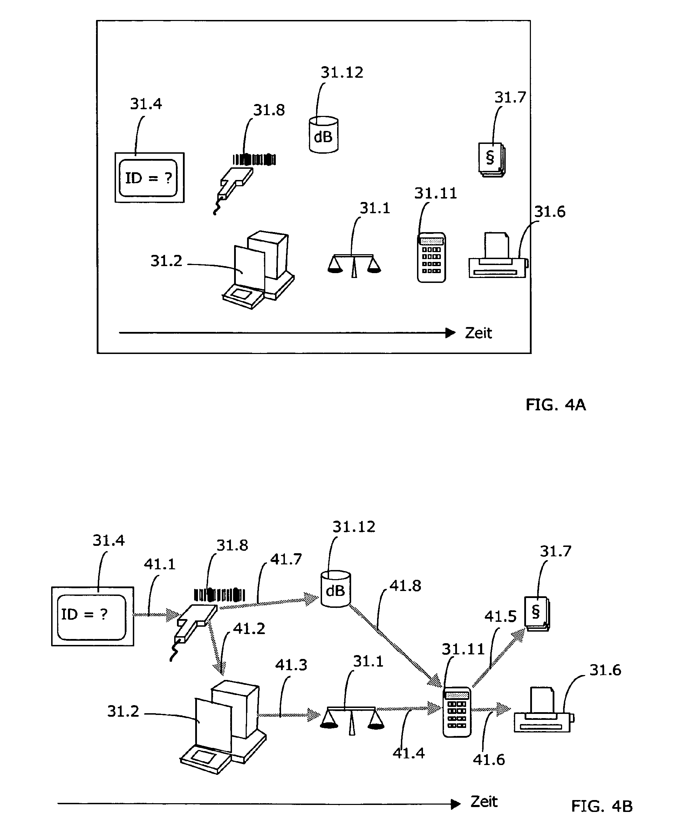

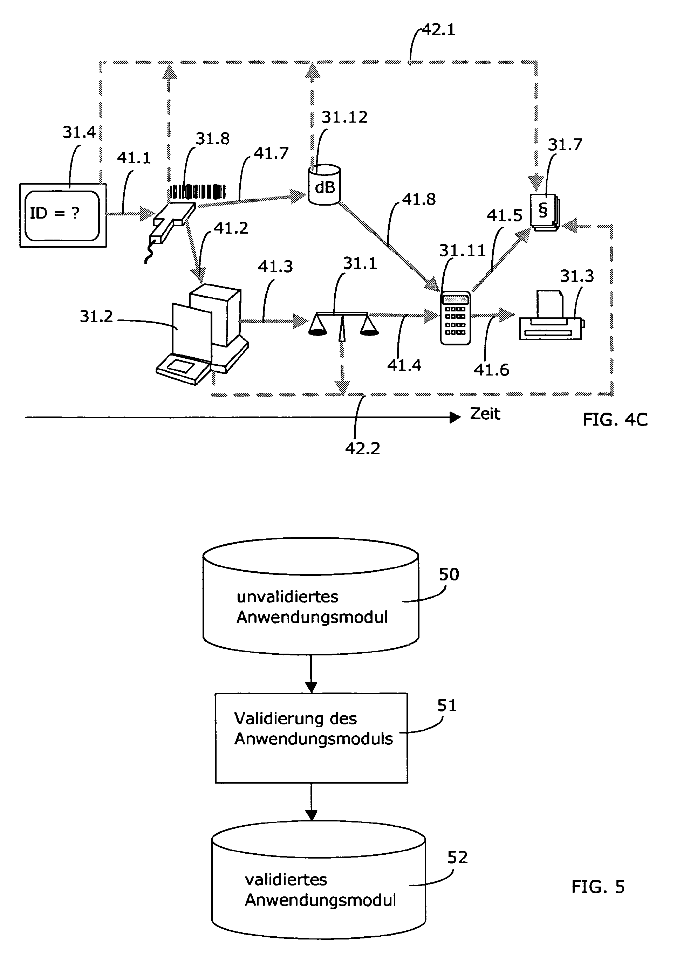

Weitere Details zu einer Ausführungsform des erfindungsgemässen verfahrens werden im Zusammenhang mit den Figuren 3, 4A, 4B und 4C beschrieben. In Figur 3 ist anhand eines Beispiels schematisch dargestellt, wie mehrere Anwendungsmodule 31.1 - 31.12 auf der Anzeigevorrichtung 9 zum Beispiel in Form grafischer Elemente dargestellt werden können. Die Anwendungsmodule 31.1 - 31.12 sind vorzugsweise in Form kleiner Piktogramme dargestellt. Diese Darstellungsform ist als Beispiel zu verstehen. Selbstverständlich kann die Kennzeichnung eines Anwendungsmoduls in irgend einer geeigneten Form geschehen, beispielsweise als beschreibender Text. Im Rahmen dieser Beschreibung und in den Patentansprüchen wird auch ein derartiger Textblock vom Begriff "grafisches Element" eingeschlossen.

Das Softwaremodul 7 löst die Darstellung eines Programmfensters 30 aus. Innerhalb des Programmfensters 30 kann eine Arbeitsfläche 33 angezeigt werden. Am unteren Rand der Arbeitsfläche 33 ist eine Zeitachse 32 vorgesehen, die es ermöglichen soll die Anwendungsmodule 31.1 - 31.12 in einen zeitlichen Bezug zu setzen.

Die Anwendungsmodule 31.1 - 31.12 repräsentieren die folgenden Systeme/Komponenten/Verfahrenschritte:
31.1 ein Symbol, das anzeigt, dass ein Wägeschritt auf einem gravimetrischen Messinstrument durchzuführen ist;
31.2 ein gravimetrisches Messinstrument (z.B. eine waage);
31.3 ein Arbeitsplatzdrucker;
31.4 ein Symbol, das anzeigt, dass der Benutzer sich über eine elektronische Unterschrift identifizieren muss, indem er zum Beispiel eine Benutzerkennung (ID) und eine Passwort (Pw) eingibt;
31.5 ein Kartenleser zum Einlesen einer Smartcard, oder dergleichen;
31.6 ein Netzwerkdrucker;
31.7 ein Symbol, das anzeigt, dass gemäss Regelsatz eine Speicherung elektronischer Dokumente erfolgt;
31.8 ein manueller Bardcode-Leser zum Einlesen eines Strichcodes;
31.9 ein Symbol, das anzeigt, dass Ergebnisse an eine Tabellenkalkulation übergeben werden;
31.10 ein Symbol, das anzeigt, dass Ergebnisse in Form eines Diagramms dargestellt werden;
31.11 eine Auswerteeinheit zum Durchführen von Berechnungen/Auswertungen;
31.12 eine Datenbank.

Die Darstellung in den Figuren 4A - 4C ist stark schematisiert, um die grundlegenden Zusammenhänge der Erfindung besser beschreiben zu können.

Nachdem das Softwaremodul 7 die gezeigte Arbeitsfläche 33 auf der Anzeige 9 dargestellt hat, kann der Benutzer am Computer 11 eines oder mehrere der verschiedenen Anwendungsmodule 31.1 - 31.12 auswählen und auf der Fläche 33 platzieren. Dieser Vorgang kann zum Beispiel mit einer Computermaus mit einfachen Drag und Drop Aktionen ausgeführt werden.

In der Figur 4A ist eine Momentaufnahme gezeigt, nachdem die Anwendungsmodule 31.4, 31.8, 31.2, 31.12, 31.1, 31.11, 31.7, und 31.6 platziert wurden. Es erfolgt in einem der nächsten Schritte die verknüpfung der Anwendungsmodule 31.4, 31.8, 31.2, 31.12, 31.1, 31.11, 31.7, und 31.6. Das verknüpfen der Anwendungsmodule kann zum Beispiel mit der Eingabevorrichtung (Computermaus) vorgenommen werden. Gemäss Erfindung beschreibt eine verknüpfung die zeitliche Abfolge der verschiedenen Anwendungsmodule untereinander. zu diesem zweck kann zum Beispiel eine zeitachse 32 vorgegeben sein, um die Anwendungsmodule entlang der zeitachse 32 anzuordnen. Es ist zum Beispiel auch denkbar, dass die durch graue Pfeile dargestellten verknüpfungen in chronologischer Reihenfolge durchnummeriert werden, um so eine zeitliche Abfolge festzulegen.

In Figur 4B sind Verknüpfungen 41.1 - 41.8 als graue Pfeile gezeigt. Die verknüpfungen 41.1 - 41.8 legen fest, in welcher zeitlichen Abfolge die durch die verschiedenen Anwendungsmodule 31.4, 31.8, 31.2, 31.12, 31.1, 31.11, 31.7, und 31.6 repräsentierten verfahrensschritte auszuführen sind. Die gezeigte Anordnung wurde vom Benutzer zusammengestellt, um durch den Computer 11 im Zusammenspiel mit dem Softwaremodul 7 ein Anwendungsprogramm generieren zu lassen, das die folgenden Schritte ausführt, bzw. deren Ausführung unterstützt:
- Anfordern einer Benutzeridentifikation (Anwendungsmodul 31.4);
- Nachdem ein Benutzer sich zum Beispiel durch Eingabe der ID und des PW identifiziert hat, wird der Benutzer aufgefordert, mittels des manuellen Barcode-Lesers (Anwendungsmodul 31.8) den zu wiegenden Stoff genau zu identifizieren. Zu diesem zweck kann zum Beispiel die verpackung des zu wiegenden Stoffes mit einem entsprechenden Strichcode versehen sein, der mit dem Barcode-Leser eingelesen wird.
- Beladen der waage mit dem zu wiegenden Stoff (Anwendungsmodul 31.2).
- Durchführen eines wägeschritts (Anwendungsmodul 31.1).
- Abrufen von Stoff-Information, die den zu wiegenden Stoff betrifft, aus einem Speicher (Anwendungsmodul 31.12). Der Abruf erfolgt unter verwendung der Information, die der Barcode-Leser liefert (verknüpfung 41.7).
- Übergeben der beim wägeschritt gemessenen Grössen an eine Auswertungseinheit (Anwendungsmodul 31.11).
   Zusätzlich bekommt die Auswerteeinheit Stoff-Information aus dem Speicher bereitgestellt (verknüpfung 41.8).
- Die Auswerteeinheit führt vorgegebene Berechnungs /Auswerteschritte durch und übergibt die Ergebnisse an einen lokalen Drucker (Anwendungsmodul 31.6).
- Zusätzlich werden die Ergebnisse an ein System übergeben, das für deren Dokumentierung sorgt (Anwendungsmodul 31.7).

Nach dem Erstellen der Verknüpfungen ist ein erster Teil des erfindungsgemässen Verfahrens abgeschlossen und es steht ein unvalidiertes Anwendungsprogramm zur verfügung. Dieses unvalidierte Anwendungsprogramm kann zwischengespeichert werden, um dann zu einem späteren zeitpunkt einer validierung zugeführt zu werden. Die weiterverarbeitung kann auch Hand in Hand mit dem Erstellen des Anwendungsprogramms von Statten gehen.

Gemäss Erfindung kann die computerunterstützte validerung des vom Benutzer definierten verfahrens auch unmittelbar im Anschluss an das Erstellen des unvalidierten Anwendungsprogramms erfolgen. Es ist denkbar, dass das unvalidierte Anwendungsprogramm vor der Validierung von einer (Programmier- oder Maschinen-)Sprache in eine andere übertragen wird.

Die validierung des Anwendungsprogramms geschieht unter Anwendung eines Regelsatzes, der vorgegeben ist. Im Rahmen dieser Validierung werden alle relevanten Aspekte des Anwendungsprogramms anhand der Regeln überprüft. Das vom Benutzer definierte Anwendungsprogramm wird erst zur Benutzung freigegeben, wenn die validierung erfolgreich abgeschlossen ist.

Falls die validierung nicht erfolgreich verläuft, zum Beispiel weil eine der Regeln des Regelsatzes nicht erfüllt ist, kann das Anwendungsprogramm angepasst werden. Diese Anpassung kann entweder manuell erfolgen, indem der Benutzer von dem softwaremodul 7 die Möglichkeit geboten bekommt die Konstellation der Anwendungsmodule und/oder deren verknüpfungen zu überarbeiten. Die Anpassung kann auch mit Unterstützung des Computers 11 erfolgen. So kann das Softwaremodul 7 auf dem Bildschirm 9 anzeigen, welche Aspekte des Anwendungsprogramms eine Verletzung des Regelsatzes hervorgerufen haben. Der Benutzer kann dann an diesem Punkt ansetzen und computerunterstützte Korrekturen unter zuhilfenahme der Eingabevorrichtung vornehmen.

In einer weiteren Ausführungsform liefert das Softwaremodul 7 Korrekturvorschläge. Ein Korrekturvorschlag kann zum Beispiel mittels grafischer Mittel angezeigt werden. Damit wird die manuelle Korrektur vereinfacht. Es können auch Hinweise per Text- oder Audioausgabe gegeben werden, um dem Benutzer die Korrektur seines Anwendungsprogramms zu erleichtern.

Am Beispiel der Figur 4C ist ein Korrekturvorgang erläutert. Der in dem Beispiel zur Anwendung gebrachte Regelsatz schreibt vor, dass alle durchgeführten verfahrensschritte elektronisch protokolliert werden müssen. Ein einfaches Dokumentieren der Ergebnisse, wie der Benutzer das durch die verknüpfung 41.5 zwischen der Auswerteeinheit 31.11 und dem Anwendungsmodul 31.7 vorgegeben hat, reicht nicht aus. Die validerung des unvalidierten Anwendungsprogramms gemäss Figur 4B verläuft somit nicht erfolgreich. Das Softwaremodul 7 ändert nun die Anzeige auf dem Bildschirm 9, um dem Benutzer eine grafische Hilfestellung zu geben. In dem vorliegenden Beispiel schlägt das Softwaremodul 7 vor, jedes der Anwendungsmodule 31.4, 31.8, 31.12, 31.2 und 31.1 mit dem Anwendungsmodul 31.7 zu verknüpfen. Dies geschieht durch das Einblenden gestrichelter Pfeile 42.1 und 42.2. Der Benutzer kann diesen Korrekturvorschlag akzeptieren, oder weitere Änderungen vornehmen.

Nach dem Anpassen des Anwendungsprogramm wird durch den Computer 11 eine erneute validierung ausgeführt.

Falls die validierung 51 eines unvalidierten Anwendungsprogramms 50 erfolgreich verlaufen ist (siehe Figur 5), kann das vom Benutzer definierte Anwendungsprogramm zur Benutzung freigegeben werden. Ein solches Anwendungsprogramm wird hierin als validiertes Anwendungsprogramm 52 bezeichnet.

Gemäss Erfindung ist es wichtig, dass das gravimetrische Messinstrument nur validierte Anwendungsprogramme 52 ausführt, oder aber eine eindeutige Kennzeichnung deutlich macht, dass es sich um ein nicht validiertes Programm handelt, vorzugsweise mit entsprechender Protokollierung. So ist es möglich ein Gesamtsystem zu erstellen, das regelkonform ist.

Es gibt verschiedene Möglichkeiten ein Anwendungsprogramm als validiertes Anwendungsprogramm zu kennzeichnen. Dies kann durch das Setzen eines Flags oder durch das Einbetten eines Schlüssels erfolgen, den ein gravimetrisches Messinstrument, gemäss Erfindung, zu interpretieren weiss. Besonders geeignet sind verschlüsselungsverfahren, wie zum Beispiel Pretty-Good-Privacy (PGP), wo das Softwaremodul 7 den öffentlichen Schlüssel des gravimetrischen Messinstruments kennt. Mit diesem Schlüssel erfolgt dann durch das Softwaremodul 7 ein verschlüsseln des validierten Anwendungsprogramms. Das gravimetrische Messinstrument hat einen privaten Schlüssel, der geheim beleibt. Mit diesem privaten Schlüssel kann das gravimetrische Messinstrument das verschlüsselte, validierte Anwendungsprogramm entschlüsseln und dann Schritt für Schritt abarbeiten.

Das Softwaremodul 7 kann auch so ausgelegt sein, dass eine umsetzung in eine maschinenlesbare Fassung nur dann erfolgt, wenn die validierung erfolgreich war. In dieser maschinenlesbaren Fassung kann das validierte Anwendungsprogramm dann dem gravimetrischen Messinstrument übergeben werden. Maschinenlesbar bedeutet in diesem zusammenhang, dass eine umsetzung in eine Sprache erfolgt, die durch den Prozessor des gravimetrischen Messinstruments (oder des Computers) abgearbeitet werden kann.

Wie eingangs erwähnt, gibt es zum Beispiel den 21 Code of Federal Regulations (CFR) Part 11, der als Regelement im Jahr 1997 durch die Food and Drug Administration (FDA) in den USA herausgegeben wurde. 21 CFR Part 11 definiert die vorschriften für das übersenden von Dokumenten in elektronischer Form und die Kriterien für die verwendung elektronischer unterschriften in rechtlich verbindlicher Form. 21 CFR betrifft insbesondere Reglemente für Good Clinical Practice (GCP), Good Laboratory Practice (GLP) und Good Manufacturing Practice (GMP) mit besonderem Augenmerk auf die pharmazeutische und die Gesundheitsindustrie. Der Part 11 betrifft die von der FDA reglementierten Belange im zusammenhang mit elektronischen Aufzeichnungen und elektronischen Unterschriften.

Ein System, das 21 CFR Part 11 erfüllt, ermöglicht die Benutzung und Abgabe elektronischer Aufzeichnungen statt der üblichen Aufzeichnungen in Papierform, die aufwendig zu versenden und speichern sind. Es wird auch das Risiko bewusster Manipulationen und verfälschter Resultate reduziert. Der unautorisierte zugriff auf Daten wird unterbunden und Aufzeichnungen können bis zum urheber zurückverfolgt werden, wenn ein entsprechende "Audit-Trail" gelegt wurde.

Die Erfüllung von 21 CFR Part 11 kann nicht durch ein gravimetrisches Messinstrument alleine erreicht werden. Damit eine Firma oder Institution vollständig 21 CFR Part 11 erfüllen kann, ist es wichtig, elektronische Aufzeichnungen zu verwenden und elektronische unterschriften einzuführen. Jegliche verfahrensabläufe, die sich in einem Labor- oder Fertigungssystem (hierin als Gesamtsystem bezeichnet) abspielen, sollten durch SOPS unter vollständiger Berücksichtigung der 21 CFR Part 11 festgelegt werden. Es ist auch notwendig, dass sämtliche Benutzer der Teil- oder Gesamtsysteme ausreichend in der Anwendung von 21 CFR Part 11 ausgebildet sind und deren Regeln befolgen.

Sowohl die gravimetrischen Messinstrumente, als auch die Gesamtsysteme, in denen solche gravimetrischen Messinstrumente erfindungsgemäss eingesetzt werden, müssen die durch den Regelsatz vorgegebenen Regeln erfüllen. Das Softwaremodul 7 zum Erstellen des Anwendungsprogramms berücksichtigt daher bei der validierung den Regelsatz, um sicher zu stellen, dass nur validierte Anwendungsprogramme eingesetzt werden. Ein solches validiertes Anwendungsprogramm ist der erste Bestandteil eines regelkonformen (Gesamt)Systems. Es ist weiterhin wichtig, dass das gravimetrische Messinstrument, auf dem das Anwendungsprogramm zur Ausführung kommt, auch regelkonform ist.

Ein regelkonformes gravimetrisches Messinstrument, auf dem ein validiertes Anwendungsprogramm ausgeführt wird, ist als System regelkonform, wenn es in sich geschlossen ist. Einflüsse von aussen sind zu vermeiden, oder genauestens zu reglementieren, um Manipulationen zu vermeiden.

Bei einem Gesamtsystem, das mehrere Teilsysteme aufweist, sollte jedes der Teilsysteme, jede der verbindungen zwischen diesen Teilsystemen und das Anwendungsprogramm regelkonform sein.

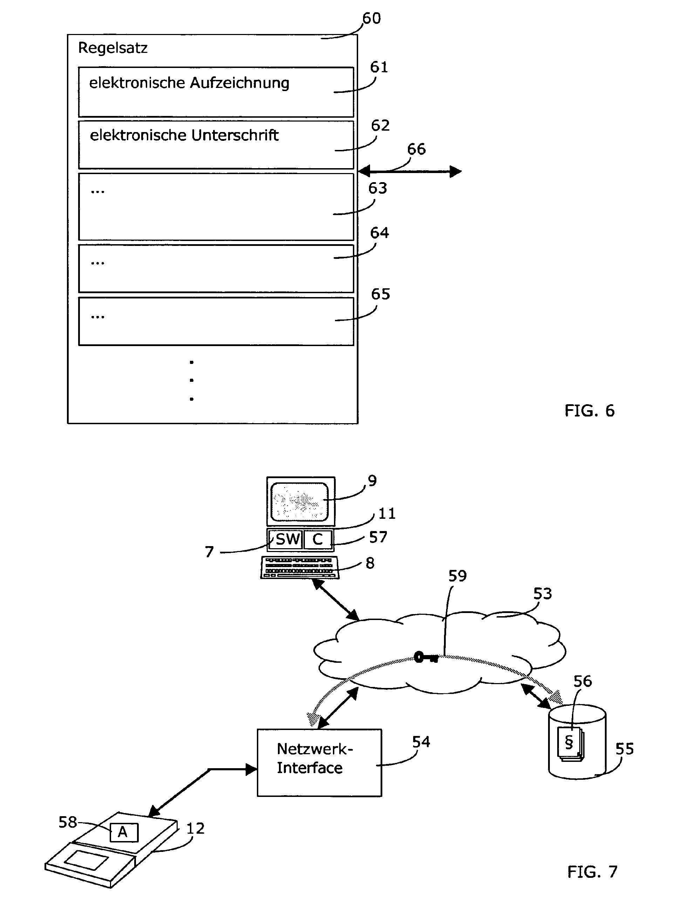

Gemäss einer Ausführungsform der Erfindung umfasst der Regelsatz 60, der bei der validierung eines unvalidierten Anwendungsprogramms zur Anwendung kommt, mindestens die beiden folgenden Regelmodule: (1) elektronische Aufzeichnung 61 und (2) elektronische unterschrift 62, wie in Figur 6 schematisch angedeutet. Der Regelsatz 60 kann weitere Regelmodule 63 - 65 umfassen. über eine Schnittstelle 66 steht der Regelsatz 60 mit dem Softwaremodul 7 in Verbindung.

Zusätzlich kann der Regelsatz 60 mit einer wissensbasis erweitert werden, die von dem Softwaremodul 7 angefragt wird, um dem Benutzer bei einer fehlgeschlagenen validierung Korrekturvorschläge machen zu können.

Die eindeutige Identifizierung und Authentifizierung von Benutzern ist ein wichtiger Baustein eines regelkonformen Systems. Nur so kann die Benutzung regelkonformer Systeme und das Erzeugen, Ändern, Speichern und übertragen elektronischer Aufzeichnungen abgesichert werden. Dabei kann auch die Integrität und die vertraulichkeit der elektronischen Aufzeichnungen geregelt werden.

Der Login vor dem Benutzen eines regelkonformen gravimetrischen Messinstruments ist gemäss Erfindung eines der Anwendungsmodule, das beim Erstellen eines Anwendungsprogramms zwingend vorausgesetzt wird. Ein Login-Anwendungsmodul 31.4 kann zum Beispiel die Eingabe einer Benutzeridentifikation (ID) und eines Passworts (Pw) als elektronische Unterschrift vorschreiben. Statt dem Login-Anwendungsmodul 31.4 kann auch eine Smartcard oder dergleichen mit einem Kartenlesegerät (Anwendungsmodul 31.5) eingesetzt werden, um es dem Benutzer zu erlauben sich gegenüber dem System auszuweisen.

In einer Ausführungsform kann der Regelsatz Regeln zum verwalten der Benutzer umfassten. üblicherweise ist in diesem Fall eine Datenbank mit Angaben zu den verschiedenen Benutzern vorgegeben. Im Fall eines versuchten Logins kann das Anwendungsprogramm auf diese Datenbank zugriff nehmen, um zu prüfen, ob eine Person, die sich anzumelden versucht, überhaupt zugelassen ist, und falls eine zulassung vorliegt, welcher Kategorie von Benutzern die Person zuzuordnen ist. Durch die vorgaben verschiedener Kategorien kann ein regelkonformes System gegen unzulässige Eingriffe abgesichert werden.

In einer anderen Ausführungsform werden Eingriffe und/oder Modifikationen an einem validierten Anwendungsprogramm oder an einem regelkonformen System nur zugelassen, wenn der Benutzer sich durch eine elektronische unterschrift (z.B. in Form der Eingabe einer ID und eines PW) ausweist. Es kann zu diesem zweck ein spezielles Anwendungsmodul vorgesehen werden, das bei Eingriffen und/oder Modifikationen eingesetzt wird.

In noch einer anderen Ausführungsform der Erfindung wird ein sogenanntes Audit-Trail-Anwendungsmodul vorgegeben. Sinn und zweck dieses Moduls ist das Erzeugen sicherer, computergenerierter, zeitgestempelter Überprüfungsspuren (audit-trails) auf den elektronischen Dokumenten. Derartige Überprüfungsspuren ermöglichen jederzeit die überprüfung, wer, wann und wie ein regelkonformes System benutzt hat. Auch können bei Eingriffen und/oder Modifikationen Überprüfungsspuren eingebaut werden, um die Eingriffe und/oder Modifikationen im Nachhinein nachvollziehen zu können.

Es gibt gemäss Erfindung Anwendungen, bei denen die Sicherheit und Integrität der gespeicherten elektronischen Dokumente gewährleistet sein muss. Zu diesem zweck kann in dem Regelsatz ein entsprechendes Datenbank-Regelmodul vorgesehen sein.

Dieses Datenbank-Regelmodul kann zum Beispiel vorschreiben, dass alle wesentlichen Verfahrenschritte, die ein Anwendungsprogramm steuert und/oder kontrolliert, in einer speziellen Datenbank dokumentiert werden. Das Anwendungsmodul 31.7 ist ein solches Modul. Sämtliche Schritte werden in elektronischer Form dokumentiert und in einer Datenbank abgelegt. Dort können sie weder entfernt noch geändert werden. Vorzugsweise werden bei der Aufzeichnung der Schritte auch überprüfungsspuren abgelegt.

In einer weiteren Ausführungsform der Erfindung wird zwischen dem gravimetrischen Messinstrument, auf dem gewisse Verfahrenschritte unter Mitwirkung des erfindungsgemässen, validierten Anwendungsprogramms ausgeführt werden, und der Datenbank eine sichere Kommunikationsverbindung gefordert. Eine sichere Kommunikationsverbindung ist notwendig, um ein unberechtigtes Abändern oder Ersetzen von elektronischen Dokumenten zu verhindern, während diese zum Beispiel von der waage an die Datenbank übergeben werden.

Eine sichere Kommunikationsverbindung im Sinn der Erfindung kann verschiedene Formen annehmen, je nach Anwendungsgebiet und je nach den aktuellen vorschriften des Regelsatzes. Im Folgenden sind einige Beispiele einer sicheren Kommunikationsverbindung beschrieben:
- Durch die Anwendung eines sicheren
   Kommunikationsprotokolls bei der Kommunikation zwischen dem gravimetrischen Messinstruments und der Datenbank, kann die Kommunikation als solche sicher gestaltet werden. Als sicheres Kommunikationsprotokoll wird ein Protokoll bezeichnet, das die übertragung gegen übertragungsfehler absichert, und/oder das die übertragung gegen Manipulation von Aussen absichert.
- Eine sichere Kommunikationsverbindung kann auch bedeuten, dass vor und während jeder Kommunikation überprüft wird, ob die verbindung intakt ist. Diese Massnahme kann helfen zu verhindern, dass zwar das gravimetrische Messinstrument die elektronische Dokumentation aller Schritte vornimmt und gemäss Regelsatz diese elektronischen Dokumente in Richtung der Datenbank absendet, dass diese dort aber nicht eintreffen und folglich auch nicht abgelegt werden können, da die Kommunikationsverbindung unterbrochen ist/war.
- Eine sichere Kommunikationsverbindung kann es auch notwendig machen, dass ein gravimetrisches Messinstrument mit einem zwischenspeicher ausgerüstet ist, um elektronische Dokumente speichern zu können, während Probleme mit der Kommunikationsverbindung und/oder der Datenbank auftreten. Sollte der zwischenspeicher voll sein, so sollte das Anwendungsprogramm die Ausführung sämtlicher Schritte unterbrechen, damit keine Situation eintritt, die zu einer verletzung des Regelsatzes führt.

In einer anderen Ausführungsform der Erfindung wird die Datenbank 55 zum Aufzeichnen elektronischer Dokumente 56 einer zentralen Verwaltung unterstellt, wie in Figur 7 gezeigt. Es ist zum Beispiel denkbar, dass diese Datenbank 55 durch eine anerkannte Institution kontrolliert und verwaltet wird. Die Datenübertragung von der waage 12 zu einer solchen Datenbank kann über eine sichere Kommunikationsverbindung 59 (in Figur 7 durch den grauen Doppelpfeil mit Schlüssel angedeutet) erfolgen. Es ist auch denkbar dass die Daten übermittelt werden, indem die Daten auf Datenträgern gespeicherten werden und die Datenträger an die Institution verschickt werden, welche die Datenbank 55 verwaltet. Dort können die Daten dann von dem Datenträger auf die Datenbank 55 überspielt werden. Ein solches Gesamtsystem ist in Figur 7 gezeigt. Der Computer 11 mit Eingabevorrichtung 8 und Bildschirm 9 umfasst ein softwaremodul 7 zum Erstellen und validieren eines Anwendungsprogramms 58. Des weiteren umfasst der Computer 11 in der gezeigten Anwendungsform eine Kontrollanwendung 57. Der Computer 11 kann über ein Netzwerk 53 und ein Netzwerk-Interface 54 mit einem gravimetrischen Messinstrument 12 verbunden werden. Die zentrale Datenbank 55 kann von dem gravimetrischen Messinstrument 12 aus über das Netzwerk-Interface 54 und das Netzwerk 53 erreicht werden. Nachdem das Anwendungsprogramm 58 vom Computer 11 über das Netzwerk 53 in das gravimetrische Messinstrument 12 geladen wurde, steuert das Anwendungsprogramm 58 die Ausführung verschiedener Schritte. Die Kontrollanwendung 57 überwacht die Ausführung der Schritte und die Einhaltung eines vorgegebenen Regelsatzes.

In einer anderen Ausführungsform gemäss Erfindung weist ein Gesamtsystem einen sicheren lokalen Datenspeicher und eine sichere verbindung zu diesem Datenspeicher auf. Parallel zum Ablegen der elektronischen Dokumente in diesem Datenspeicher werden redundante elektronischen Dokumente gleichzeitig auch an einen anderen (zentralen) Datenspeicher übermittelt. Wenn die redundanten Dokumente dort sicher abgelegt wurden, kann ein Signal an den lokalen Datenspeicher gesendet werden, um dort die entsprechenden Daten zu löschen. Damit kann Platz für neuere Daten geschaffen werden.

Gemäss Erfindung kann zum Beispiel ein verfahren mit den in Figur 4C dargestellten verfahrensschritten ablaufen. Es ist das ziel des verfahrens einen verfahrensablauf zur automatisierten Benutzung einer elektronischen, mit oder ohne Peripheriegeräte versehenen waage 4, 12 oder 14 zu definieren, die über ein externes bzw. internes Netzwerk-Interface und ein Netzwerk 15 mit einem Computer 11 in Kommunikationsverbindung stehen kann. Es ist offensichtlich, dass vor, während oder nach den angegebenen verfahrensschritten zusätzliche Schritte ausgeführt werden können.

In einer weiteren Ausführungsform der Erfindung ist das Netzwerk 15 des Systems ein standardisierter Bus. In diesem Fall kann ein Standardkommunikationsprotokoll zur Kommunikation zwischen den Netzwerk-Interfaces und dem Computer eingesetzt werden. Dies erleichtert die umsetzung der Erfindung, da sowohl standardbauteile (z.B. als Bus-Treiber), als auch standardsoftware verwendet werden können. Vorzugsweise kommt ein Ethernet-Bus und ein IPbasiertes Protokoll zur Anwendung. Der Bus kann entweder durch Kabel, Glasfaser oder als drahtloser Bus ausgelegt sein. Gut geeignet ist zum Beispiel ein drahtloser Bluetooth-Kommunikationsansatz oder ein Funk-LAN nach der Norm IEEE802.11b.

Vorzugsweise umfasst das Netzwerk-Interface 13 Mittel, um die Sicherheit der Kommunikation sicherstellen zu können.

Die vorliegende Erfindung ist besonders gut geeignet, um durch das Anwendungsprogramm einen verfahrensablauf, einen Messablauf oder Analysevorgang zu definieren, der auf einer waage durchzuführen ist. Dabei kann es sich zum Beispiel um einen interaktiven Ablauf handeln, bei dem der Messablauf nach Drücken einer Start-Taste beginnt. Am Display 16 der waage 12 (siehe Figur 1) kann jeweils ein begleitender Text oder ein Piktogramm (z.B. unterstützt mit akustischen und/oder optischen Signalen) angezeigt werden. So kann zum Beispiel der Benutzer per Textanzeige aufgefordert werden, die zu wiegende Substanz auf die waage zu legen.

Es können gemäss Erfindung zum Beispiel folgenden Daten ermittelt und ausgegeben werden: absolutes Gewicht, relatives Gewicht, Temperatur, Temperaturdifferenz, zeit, Datum, Druck, Luftfeuchtigkeit, usw. welche dieser Daten effektiv zur verfügung stehen, hängt selbstverständlich von der Art und Ausstattung der verwendeten Waage, der angeschlossenen Peripheriegeräte mit ihren Sensoren und des verwendeten Anwendungsprogramms ab.

Vorzugsweise können die Anwendungsmodule als eine Art Templates (Muster) vorgegeben werden. Der Benutzer kann dann ein geeignetes Template anwählen und die mit dem Template vorgegebenen Parameter anzeigen lassen. Die Parameter können manuell geändert werden. Wenn das Template seinen vorstellungen entspricht, kann das nächste Anwendungsmodul bearbeitet/angepasst werden.

Gemäss einer weiteren Ausführungsform der Erfindung lässt sich ein Anwendungsprogramm aus einzelnen Modulen (subprozessen) aufbauen. Im Folgenden sind einige Beispiele derartiger Module gegeben. Diese Auflistung ist ohne Anspruch auf vollständigkeit und dient lediglich der Erläuterung:
- Türe auf (die Türe der Waage wird automatisch geöffnet);
- Waage beladen (es erfolgt die Aufforderung, zum Beispiel per Textanzeige, die Waage zu beladen);
- "Wait stable weight" (dies ist eine Routine, die abwartet, bis die waage sich in Ruhe befindet);
- Windabweiser öffnen oder schliessen;
- Lift anheben oder absenken;
- Schaltfläche definieren;
- Text anzeigen;
- Anzeige löschen;
- Text auf Drucker ausgeben;
- Text an Computer übergeben;
- Dialog eröffnen;
- Datenformat definieren;
- usw.

Gemäss einer weiteren Ausführungsform sind zu einigen der Anwendungsmodule gewisse Grundeinstellungen (Defaults) hinterlegt. Durch einen Doppelklick auf das Icon eines Anwendungsmoduls kann man sich diese Einstellung anzeigen lassen, um dann gegebenenfalls Änderungen vorzunehmen. In dieser Ausführungsform sollten dann bei der validierung auch diese Parameter überprüft werden, um das Einhalten der Regeln gewährleisten zu können.

Die Ausführung eines validierten Anwendungsprogramms kann durch eine Kontrollanwendung (zum Beispiel Kontrollanwendung 57 in Figur 7) begleitet werden. Die Kontrollanwendung sitzt entweder im Computer 11 oder in dem gravimetrischen Messinstrument 4, 12 oder 14. Es ist auch denkbar, dass die Kontrollanwendung im Computer 2 sitzt, der mit dem gravimetrischen Messinstrument 4 verbunden ist.

Die Kontrollanwendung gemäss Erfindung kann eine oder mehrere der folgenden Eigenschaften aufweisen:
- Überprüfen, ob das gravimetrische Messinstrument, auf dem ein validiertes Anwendungsprogramm auszuführen ist, den Spezifikationen entspricht;
- Überprüfen, ob das gravimetrische Messinstrument einsatzbereit ist;
- Überwachen der einzelnen verfahrensschritte darauf, ob deren Ausführung gemäss den vorgaben des Regelsatzes erfolgt;
- Einleiten und Ausführen von Notmassnahmen, falls es zu Problemen bei der Ausführung eines verfahrens kommt;
- Stoppen des verfahrens bis Probleme gelöst sind;
- Dokumentieren falls es zu Problemen kommt, usw.

Vorzugsweise sind die Kontrollanwendung und das Anwendungsprogramm aufeinander abgestimmt, um eine einwandfreie Funktion zu gewährleisten. Auch kann bei einer guten Abstimmung, zum Beispiel bei verwendung eines genau auf die Waage bezogenen, waagenspezifischen Anwendungsprogramms, die gesamte Funktionalität einer Waage ausgenützt werden.

Der Benutzer oder Kunde kann seine Applikationen ohne spezielle Programmierkenntnisse erstellen. Einmal definierte und validierte Anwendungsprogramme können gespeichert und wiederholt werden.

Beliebige Kombinationen der gezeigten und/oder beschriebenen Ausführungsformen gehören zum umfang der vorliegenden Erfindung, auch wenn diese Kombinationen nicht explizit dargestellt sind. Die Bezugszeichen in allen Figuren bezeichnen jeweils dieselben Elemente, auch wenn diese im Einzelnen nicht immer erläutert sind.

In einer weiteren Ausführungsform der Erfindung wird der Benutzer beim Erstellen eines Anwendungsprogramms Schritt für Schritt geführt, indem er entweder Auswahllisten angeboten bekommt, oder indem die als nächstes auszuführenden Schritte durch grafische Mittel hervorgehoben werden.

In einer anderen Ausführungsform der Erfindung umfasst das überwachen des Anwendungsprogramms während dessen Ausführung auch eine überwachung des Netzwerks und/oder anderer Komponenten, wie zum Beispiel der Peripheriegeräte, eines Gesamtsystems.

Vorzugsweise kann gemäss Erfindung das Erstellen eines Anwendungsprogramms so erfolgen, dass zeitabläufe, schleifen (zum Beispiel zur wiederholung gewisser verfahrensschritte) und Parameter vorgegeben werden können. Zu diesem zweck bietet die erfindungsgemässe Software zum Beispiel eine menügestützte Schnittstelle und eine Befehlszeile (command prompt) an. Es sind Schnittstellen vorhanden, durch die Daten oder andere Information importiert oder exportiert werden können.

So können zum Beispiel die Anwendungsmodule Schnittstellen zur übergabe oder zum Bereitstellen von Daten aufweisen. Vorzugsweise ist eine solche Schnittstelle an dem entsprechenden grafischen Element dieses Anwendungsmoduls grafisch als Schnittstelle dargestellt. Beim verknüpfen zweier Anwendungsmodule, die je eine Schnittstelle aufweisen, können die grafisch dargestellten Schnittstellen zum Beispiel mittels einer zeigevorrichtung, vorzugsweise mittels Computermaus, verknüpft werden.

Vorzugsweise wird das Erstellen einer Anwendung durch eine Hilfe-Funktion, z.B. in Form einer context-sensitive help function, begleitet.

In einer weiteren Ausführungsform werden Schnittstellen zu den üblicherweise verwendeten Datenbankformaten, Arbeitslisten und Tabellenkalkulationen angeboten.

Es ist ein vorteil der Erfindung, dass selbst komplizierteste Anwendungen mit einem einfach zu verwendenden Drag und Drop-Ansatz erstellt werden können. Die Benutzung des erfindungsgemässen Softwaremoduls 7 ist intuitiv und einfach zu erlernen.

Das Softwaremodul 7 kann modular aufgebaut sein und es können jederzeit weitere Anwendungsmodule geladen werden, oder es können ältere versionen durch neuere Releases ersetzt werden.

In einer weiteren Ausführungsform handelt es sich bei dem Regelsatz um eine Umsetzung einer Norm oder einer de facto Norm, welch letztere gemeinhin auch als Standard bezeichnet wird.

Gemäss Erfindung kann ein Anwendungsprogramm als Applikation oder als Applet ausgebildet sein.

Die Erfindung erlaubt die komplette Definition von Anwendungsprogrammen und deren Kontrolle während der Ausführung auf einem gravimetrischen Messinstrument.

Standardabläufe können aus einer Bibliothek geladen werden, in der sie bereit gestellt werden. Solche Standardabläufe können modifiziert oder mit zusätzen versehen werden, um eigene Anwendungen zu erstellen. Die Bibliothek mit Standardanwendungen kann entweder herstellerseitig bereitgestellt werden, oder die Standardanwendungen können durch den Benutzer des gravimetrischen Messinstruments oder durch die Firma bzw. Institution in der das Messinstrument eingesetzt wird vorgeben werden.

Die Erfindung ermöglicht es dem Benutzer eine ganze Anwendung, inklusive aller wägeschritte, mit einfachen Point-und-click Schritten und entsprechenden verknüpfungen zu erstellen. Jedes einzelne Anwendungsmodul kann einfach hinzugefügt, entfernt, oder ersetzt werden.

Die vorliegende Erfindung bewährt sich besonderes im umfeld oder in Einsatzgebieten von "Laboratory Information Management Systemen" (LIMS) oder im Produktionsumfeld, wo sämtliche Schritte und Handhabungen genauestens dokumentiert werden müssen.

Die Erfindung ermöglicht es dem Benutzer oder Betreiber sicher zu stellen, dass alle Schritte komplett und richtig ausgeführt werden und dass deren Ausführung genauestens elektronisch protokolliert wird.

Vorzugsweise werden gemäss Erfindung sämtliche Ein- und Ausgaben softwareseitig kontrolliert.

Die Erfindung stellt eine Art verfahrens-Editor bereit, der sehr leistungsfähig ist. Unter anderem zeichnet sich dieser verfahrens-Editor dadurch aus, dass eine automatische validierung durchgeführt wird.

Gemäss Erfindung kann eine Berichtsstruktur vorgegeben werden. Dies kann zum Beispiel durch einer Erweiterung des Regelsatzes erfolgen. Die Berichtsstruktur kann festlegen, ob und wann und in welcher Form Bericht erstattet wird falls es Probleme oder besondere Situation im einem verfahrensablauf gibt. Es kann zum Beispiel festgelegt werden, dass ein zusätzliches System benachrichtigt wird, oder dass eine Aufsichtsperson informiert wird.

## Patentansprüche

1. Verfahren zum computerunterstützten Erstellen eines Anwendungsprogramms, das auf einem gravimetrischen Messinstrument (4, 12, 14) ausführbar ist, wobei zum Erstellen des Anwendungsprogramms ein Computer (11) eingesetzt wird, der eine Anzeigevorrichtung (9) und eine Eingabevorrichtung (8) umfasst, und wobei das verfahren die folgenden Schritte aufweist:
- Darstellen mehrerer Anwendungsmodule (31.1 - 31.12) auf der Anzeigevorrichtung (9),
- Auswählen eines ersten Anwendungsmoduls (31.4) mittels der Eingabevorrichtung (8),
- Auswählen eines zweiten Anwendungsmoduls (31.8) mittels der Eingabevorrichtung (8),
- Verknüpfen des ersten Anwendungsmoduls (31.4) mit dem zweiten Anwendungsmodul (31.8) mittels der Eingabevorrichtung (8), um eine verknüpfung (41.1) zu definieren, die eine zeitliche Abfolge des ersten Anwendungsmoduls (31.4) und des zweiten Anwendungsmoduls (31.8) festlegt,
- computerunterstütztes umsetzen der ausgewählten Anwendungsmodule und der verknüpfung in ein Anwendungsprogramm,
- computerunterstützte validierung des Anwendungsprogramms unter Anwendung eines vorgegebenen Regelsatzes (60), wobei
i. das Anwendungsprogramm (52) zur Benutzung freigegeben wird, falls die validierung erfolgreich abgeschlossen ist, oder
ii. ein computerunterstütztes Anpassen des Anwendungsprogramms mit erneuter computerunterstützter validierung ermöglicht wird, falls die validierung nicht erfolgreich war.

2. Verfahren nach Anspruch 1, wobei auf der Anzeigevorrichtung (9) eine grafische Benutzeroberfläche (30) dargestellt wird, die eine Arbeitsfläche (33) umfasst, die es ermöglicht Anwendungsmodule (31.1 - 31.12), die vorzugsweise als grafische Elemente dargestellt sind, mittels einer Eingabevorrichtung, insbesondere einer Computermaus, zu bewegen und zu positionieren.

3. Verfahren nach Anspruch 2, wobei mindestens eines der Anwendungsmodule eine Schnittstelle zur Übergabe oder zum Bereitstellen von Daten aufweist, die vorzugsweise an dem entsprechenden grafischen Element dieses Anwendungsmoduls grafisch als Schnittstelle dargestellt ist.

4. Verfahren nach Anspruch 3, wobei bei dem verknüpfen die grafisch dargestellte Schnittstelle mittels einer zeigevorrichtung, vorzugsweise mittels Computermaus, mit einer anderen grafisch dargestellten Schnittstelle, oder mit einem anderen grafischen Element verknüpfbar ist.

5. Verfahren nach einem der vorhergehenden Ansprüche, wobei es sich bei dem Regelsatz (60) um eine umsetzung eines Standards, einer Norm, oder einer gesetzlichen vorschrift handelt.

6. Verfahren nach Anspruch 5, wobei es sich bei der gesetzlichen vorschrift um ein u.S. Code of Federal Regulations, oder eine Abwandlung desselben handelt.

7. Verfahren nach einem der vorhergehenden Ansprüche, wobei die validierung so durchgeführt wird, dass nur solche Anwendungsprogramme zur Benutzung freigegeben werden, die den Regelsatz erfüllen.

8. Verfahren nach einem der vorhergehenden Ansprüche, wobei ein Anwendungsprogramm, das zur Benutzung freigegeben ist, über einen Datenträger oder über ein Netzwerk (15; 50) dem gravimetrischen Messinstrument (4, 12, 14) zugeführt wird.

9. Verfahren nach einem der vorhergehenden Ansprüche, wobei in einem Schritt für mindestens eines der Anwendungsmodule Parameter definierbar sind, die einen Einfluss auf die Arbeitsweise und/oder Funktion des entsprechenden Anwendungsmoduls haben.

10. Verfahren nach einem der vorhergehenden Ansprüche, wobei das verfahren die folgenden zusätzlichen Schritte umfasst:
- Ausführen des Anwendungsprogramms,
- Überwachen des Anwendungsprogramms während dieses ausgeführt wird,
- Kontrollieren, ob die Ausführung des Anwendungsprogramms gemäss dem vorgegebenen Regelsatz erfolgt,
- Unterbrechen oder verzweigen der Ausführung des Anwendungsprogramms falls ein verstoss gegen Regeln des vorgegebenen Regelsatzes oder ein Nichteinhalten des vorgegebenen Regelsatzes erkannt wird.

11. Verfahren nach Anspruch 10, wobei das verfahren mindestens einen der folgenden zusätzlichen Schritte umfasst:
- Dokumentieren, falls ein verstoss gegen Regeln des vorgegebenen Regelsatzes oder ein Nichteinhalten des vorgegebenen Regelsatzes (60) erkannt wurde,
- Protokollieren der Ausführung des Anwendungsprogramms.

12. Verfahren nach Anspruch 10, wobei bei dem überwachen des Anwendungsprogramms während dessen Ausführung die folgenden zusätzlichen Schritte ausgeführt werden:
- wiederholtes überwachen, ob die verknüpfungen zwischen den Anwendungsmodulen vorhanden oder unterbrochen sind,
- falls eine solche verknüpfung unterbrochen ist,
i. Ausführen eines Recovery-versuchs, oder
ii. Unterbrechen der Ausführung des Anwendungsprogramms bis die entsprechende verknüpfung wieder vorhanden ist.

13. System mit
- einem Softwaremodul (7),
- einem Computer (11) zum computerunterstützten Erstellen eines Anwendungsprogramms (58), wobei der Computer (11) das Softwaremodul (7), eine Anzeigevorrichtung (9) und eine Eingabevorrichtung (8) umfasst,
- einem gravimetrischen Messinstrument (4, 12, 14) zum Ausführen des Anwendungsprogramms (58), und mit
- einer Kommunikationsverbindung (15; 53) durch die der Computer (11) mit dem Messinstrument (4, 12, 14) verbindbar ist,
wobei durch den Computer (11) beim Ausführen des Softwaremoduls (7) die folgenden Schritte ausführbar sind:
- Darstellen mehrerer Anwendungsmodule (31.1 - 31.12) auf der Anzeigevorrichtung (9),
- Unterstützen der Auswahl eines ersten Anwendungsmoduls mittels der Eingabevorrichtung (8),
- Unterstützen der Auswahl eines zweiten Anwendungsmoduls mittels der Eingabevorrichtung (8),
- Unterstützen des verknüpfens des ersten Anwendungsmoduls mit dem zweiten Anwendungsmodul mittels der Eingabevorrichtung (8), um eine verknüpfung (41.1 - 41.8) zu definieren, die eine zeitliche Abfolge des ersten Anwendungsmoduls und des zweiten Anwendungsmoduls festlegt,
- Umsetzen der ausgewählten Anwendungsmodule und der verknüpfung in ein Anwendungsprogramm (50),
- Validierung des Anwendungsprogramms (50) unter Anwendung eines vorgegebenen Regelsatzes (60), wobei
i. das Anwendungsprogramm (52) zur Benutzung freigegeben wird, falls die validierung erfolgreich abgeschlossen ist, oder
ii. ein computerunterstütztes Anpassen des Anwendungsprogramms (50) mit erneuter computerunterstützter validierung ermöglicht wird, falls die validierung nicht erfolgreich war.

14. System nach Anspruch 13, wobei durch das Softwaremodul (7) auf der Anzeigevorrichtung (9) eine grafische Benutzeroberfläche (30) darstellbar ist, die eine Arbeitsfläche (33) umfasst, die es ermöglicht die Anwendungsmodule (31.1 - 31.12), die vorzugsweise als grafische Elemente dargestellt sind, mittels einer Eingabevorrichtung zu bewegen und zu positionieren.

15. System nach einem der Ansprüche 13 oder 14, wobei der Computer (11) mit einem Speicher verbindbar ist in dem ein Regelsatz (60) vorgegeben ist, wobei es sich bei dem Regelsatz (60) um eine Umsetzung eines Standards, einer Norm, oder einer gesetzlichen vorschrift handelt.

16. System nach Anspruch 15, wobei es sich bei der gesetzlichen vorschrift um ein u.S. Code of Federal Regulations, oder eine Abwandlung desselben handelt.

17. System nach einem der Ansprüche 13 oder 16, wobei die validierung so durchführbar ist, dass nur solche Anwendungsprogramme (52) zur Benutzung freigegeben werden, die den Regelsatz (60) erfüllen.

18. System nach einem der Ansprüche 13 - 17, wobei ein Anwendungsprogramm (52; 58), das zur Benutzung freigegeben ist, über einen Datenträger oder über die Kommunikationsverbindung (15; 53) dem gravimetrischen Messinstrument (4, 12, 14) zuführbar ist.

19. System nach einem der Ansprüche 13 - 18, wobei das System Kontrollmittel (57) umfasst, die es ermöglichen:
- die Ausführung des Anwendungsprogramms (58) zu überwachen,
- während der Ausführung des Anwendungsprogramms (58) zu kontrollieren, ob die Ausführung des Anwendungsprogramms (58) gemäss dem vorgegebenen Regelsatz (60) erfolgt,
- die Ausführung des Anwendungsprogramms (58) zu unterbrechen oder eine verzweigung einzuleiten, falls ein verstoss gegen Regeln des vorgegebenen Regelsatzes oder ein Nichteinhalten des vorgegebenen Regelsatzes (60) erkannt wird.

20. System nach einem der Ansprüche 13 - 19, wobei das System Dokumentationsmittel (55, 56) umfasst, die es ermöglichen zu dokumentieren, falls ein verstoss gegen Regeln des vorgegebenen Regelsatzes oder ein Nichteinhalten des vorgegebenen Regelsatzes (60) erkannt wurde.

21. System nach einem der Ansprüche 13 - 20, wobei das System weitere Dokumentationsmittel umfasst, die permanent die Ausführung des Anwendungsprogramms protokollieren.

22. System nach einem der Ansprüche 13 - 21, wobei das System weitere Kontrollmittel umfasst, die es ermöglichen wiederholt zu überwachen, ob die verknüpfungen zwischen den Anwendungsmodulen vorhanden oder unterbrochen sind, und - falls eine solche verknüpfung unterbrochen ist - die Durchführung eines Recovery-versuchs auslösen oder eine weitere Ausführung des Anwendungsprogramms unterbrechen, bis die entsprechende verknüpfung wieder vorhanden ist.

23. System nach einem der Ansprüche 13 - 22, wobei das System ein Speichermittel umfasst, vorzugsweise eine relationale Datenbank (55), das mit dem Messinstrument (4, 12, 14) verbindbar ist, wobei das Speichermittel als Aufzeichnungsmedium für Information (56) dient, die mit dem Ausführen des Anwendungsprogramms (58) im zusammenhang steht.

24. System nach einem der Ansprüche 13 - 23, wobei es sich bei der Kommunikationsverbindung (15; 53) um eine sichere verbindung (59) handelt.

25. System nach Anspruch 13, worin das gravimetrische Messinstrument (4, 12, 14) einen Speicher zum speichern eines Anwendungsprogramms (58) sowie einen Prozessor zum Ausführen des Anwendungsprogramms (58) aufweist und mit Mitteln versehen ist, die es dem Computer (11) ermöglichen:
i. die Ausführung des Anwendungsprogramms (58) zu überwachen,
ii. während der Ausführung des Anwendungsprogramms (58) zu kontrollieren, ob die Ausführung des Anwendungsprogramms (58) gemäss einem vorgegebenen Regelsatz (60) erfolgt,
iii. die Ausführung des Anwendungsprogramms (58) zu unterbrechen, falls durch den Computer (11) ein verstoss gegen Regeln des vorgegebenen Regelsatzes oder ein Nichteinhalten des vorgegebenen Regelsatzes (60) erkannt wird.

26. System nach Anspruch 25, wobei es sich bei dem Regelsatz (60) um eine umsetzung eines Standards, einer Norm, oder einer gesetzlichen vorschrift handelt.

27. System nach Anspruch 26, wobei es sich bei der gesetzlichen vorschrift um ein u.S. Code of Federal Regulations, oder eine Abwandlung desselben handelt.

28. System nach einem der Ansprüche 25 - 27, worin das gravimetrische Messinstrument Prüfmittel umfasst, die sicherstellen, dass nur solche Anwendungsprogramme (52; 58) ausführbar sind, die den Regelsatz (60) erfüllen und/oder die durch den Computer (11) zur Benutzung freigegeben sind.

29. System nach einem der Ansprüche 25 - 28, wobei das Anwendungsprogramm (52; 58) als Applikation oder als Applet ausgebildet ist.

30. System nach einem der Ansprüche 25 - 29, wobei das Anwendungsprogramm (52; 58) einen Messablauf definiert, der auf dem Messinstrument (4, 12, 14) durchführbar ist.

31. Software (7) zur verwendung in einem Computer (11), um ein Anwendungsprogramm erstellen zu können, das auf einem gravimetrischen Messinstrument (4, 12, 14) ausführbar ist, wobei der Computer (11) beim Ausführen der Software (7) die Ausführung der folgenden Schritte unterstützt:
- Darstellen mehrerer Anwendungsmodule (31.1 - 31.12) auf einer Anzeigevorrichtung (9),
- Auswählen eines ersten Anwendungsmoduls (31.4),
- Auswählen eines zweiten Anwendungsmoduls (31.8),
- Verknüpfen des ersten Anwendungsmoduls (31.4) mit dem zweiten Anwendungsmodul (31.8), um eine verknüpfung (41.1) zu definieren, die eine zeitliche Abfolge des ersten Anwendungsmoduls (31.4) und des zweiten Anwendungsmoduls (31.8) festlegt,
- Umsetzen der ausgewählten Anwendungsmodule und der Verknüpfung in ein Anwendungsprogramm,
- Validierung des Anwendungsprogramms unter Anwendung eines vorgegebenen Regelsatzes (60), wobei
i. das Anwendungsprogramm (52) zur Benutzung freigegeben wird, falls die validierung erfolgreich abgeschlossen ist, oder
ii. ein computerunterstütztes Anpassen des Anwendungsprogramms mit erneuter computerunterstützter validierung ermöglicht wird, falls die validierung nicht erfolgreich war.

32. Software nach Anspruch 31, wobei auf einer Anzeigevorrichtung (9) des Computers (11) eine grafische Benutzeroberfläche (30) dargestellt wird, die eine Arbeitsfläche (33) umfasst, die es ermöglicht die Anwendungsmodule (31.1 - 31.12) mittels einer Eingabevorrichtung zu bewegen und zu positionieren, wobei die Anwendungsmodule (31.1 - 31.12) vorzugsweise als grafischen Elemente dargestellt sind.

33. Software nach einem der Ansprüche 31 oder 32, wobei es sich bei dem Regelsatz (60) um eine umsetzung eines Standards, einer Norm, oder einer gesetzlichen vorschrift handelt.

34. Software nach Anspruch 33, wobei es sich bei der gesetzlichen vorschrift um ein u.S. Code of Federal Regulations, oder eine Abwandlung desselben handelt.

35. Software nach einem der Ansprüche 31 - 34, wobei die validierung so durchgeführt wird, dass nur solche Anwendungsprogramme zur Benutzung freigegeben werden, die den Regelsatz erfüllen.

36. Software nach einem der Ansprüche 31 - 35, wobei die Software ein Anwendungsprogramm, das zur Benutzung freigegeben ist, über einen Datenträger oder ein Netzwerk (15; 50) dem gravimetrischen Messinstrument (4, 12, 14) zuführt.

## Claims

1. Method for computer-aided creation of an application program which is executable on a gravimetric measuring instrument (4, 12, 14), wherein for the purpose of creating the application program use is made of a computer (11) which contains a display device (9) and an input device (8), and wherein the method has the following steps:
- Representation of several application modules (31.1 - 31.12) on the display device (9),
- Selection of a first application module (31.4) by means of the input device (8),
- Selection of a second application module (31.8) by means of the input device (8),
- Linking the first application module (31.4) to the second application module (31.8) by means of the input device (8) so as to define a link (41.1) which determines a chronological sequence of the first application module (31.4) and the second application module (31.8),
- Computer-aided conversion of the selected application modules and the link into an application program,
- Computer-aided validation of the application program by application of a prescribed rule-set (60), wherein
i. The application program (52) is released for use if the validation is successfully completed, or
ii. Computer-aided adaptation of the application program with renewed computer-aided validation is made possible if the validation was not successful.

2. Method according to Claim 1, wherein on the display device (9) a graphical user interface (30) is represented which contains a worktop (33) which allows application modules (31.1 - 31.12), which are preferably represented as graphical elements, to be moved and positioned by means of an input device, especially a computer mouse.

3. Method according to Claim 2, wherein for the purpose of transferring or readying data, at least one of the application modules has an interface, which is preferably represented as an interface on the corresponding graphical element of this application module.

4. Method according to Claim 3, wherein when linking takes place, the graphically represented interface can be linked to another graphically represented interface, or to another graphical element, by means of a pointing device, preferably by means of a computer mouse.

5. Method according to one of the foregoing claims, wherein the rule-set (60) is an implementation of a standard, or of a legal regulation.

6. Method according to Claim 5, wherein the legal regulation is a US Code of Federal Regulations, or an adaptation of the same.

7. Method according to one of the foregoing claims, wherein the validation is executed in such manner that only such application programs as fulfill the rule-set are released for use.

8. Method according to one of the foregoing claims, wherein an application program which is released for use is provided to the gravimetric measuring instrument (4, 12, 14) via a data carrier or a network (15; 50).

9. Method according to one of the foregoing claims, wherein in one step, parameters for at least one of the application modules are definable which have an influence on the way of working and/or the function of the respective application module.

10. Method according to one of the foregoing claims, wherein the method contains the following additional steps:
- Execution of the application program;
- Monitoring of the application program while it is executed;
- Verifying whether execution of the application program takes place according to the prescribed rule-set;
- Interruption or branching of execution of the application program should a violation of the rules of the prescribed rule-set, or a non-compliance with the prescribed rule-set, be detected.

11. Method according to Claim 10, wherein the method contains one of the following additional steps:
- Documentation, if a violation of the rules of the prescribed rule-set, or a non-compliance with the prescribed rule-set (60) is detected;
- Recording the execution of the application program.

12. Method according to Claim 10, wherein while monitoring the application program during its execution, the following additional steps are executed:
- Repeated monitoring of whether the links between the application modules are present or interrupted,
- If such a link is interrupted,
i. Execution of a recovery attempt, or
ii. Interruption of execution of the application program until the respective link is present again.

13. System with
- A software module (7),
- A computer (11) for computer-aided creation of an application program (58), wherein the computer (11) contains the software module (7), a display device (9), and an input device (8);
- A gravimetric measuring instrument (4, 12, 14) for execution of the application program (58); and with
- A communications link (15; 53) via which the computer (11) can be linked to the measuring instrument (4, 12, 14) ;
wherein, while the software module (7) is being executed, the following steps can be executed by the computer (11):
- Representation of several application modules (31.1 - 31.12) on the display device (9),
- Aiding selection of a first application module by means of the input device (8);
- Aiding selection of a second application module by means of the input device (8);
- Aiding linking the first application module to the second application module by means of the input device (8) to define a link (41.1 - 41.8) which determines a chronological sequence of the first application module (31.4) and the second application module,
- Conversion of the selected application modules and the link into an application program (50),
- Validation of the application program (50) by application of a prescribed rule-set (60), wherein
i. the application program (52) is released for use if the validation is successfully completed, or
ii. computer-aided adaptation of the application program (50) with renewed computer-aided validation is made possible if the validation was not successful.

14. System according to Claim 13, wherein by means of the software module (7), on the display device (9) a graphical user interface (30) can be represented which contains a worktop (33) which allows the application modules (31.1 - 31.12), which are preferably represented as graphical elements, to be moved and positioned by means of an input device.

15. System according to one of claims 13 or 14, wherein the computer (11) can be linked to a memory in which a rule-set (60) is prescribed, wherein the rule-set (60) is an implementation of a standard, or of a legal regulation.

16. System according to Claim 15, wherein the legal regulation is a US Code of Federal Regulations, or an adaptation of the same.

17. System according to one of claims 13 or 16, wherein the validation is executable in such manner that only such application programs (52) as fulfill the rule-set (60) are released for use.

18. System according to one of claims 13 - 17, wherein an application program (52; 58) which is released for use can be provided to the gravimetric measuring instrument (4, 12, 14) via a data carrier or via the communications link (15; 53).

19. System according to one of Claims 13 - 18, wherein the system contains verification means (57) which make it possible to:
- monitor the execution of the application program (58),
- verify during execution of the application program (58) whether execution of the application program (58) takes place according to the prescribed rule-set,
- initiate interruption or branching of the execution of the application program (58) if a violation of the rules of the prescribed rule-set, or a non-compliance with the prescribed rule-set (60), is detected.

20. System according to one of claims 13 - 19, wherein the system contains means of documentation (55, 56) which makes documentation possible if a violation of the rules of the prescribed rule-set, or a non-compliance with the prescribed rule-set (60), is detected.

21. System according to one of claims 13 - 20, wherein the system contains further means of documentation, which permanently record execution of the application program.

22. System according to one of claims 13 - 21, wherein the system contains means of verification which make it possible to monitor repeatedly whether the links between the application modules are present or interrupted, and - if such a link is interrupted - to trigger execution of an attempt at recovery, or to interrupt further execution of the application program until the respective link is again present.

23. System according to one of claims 13 - 22, wherein the system contains a means of storage, preferably a relational database (55), which is connectable with the measuring instrument (4, 12, 14), wherein the means of storage serves as a medium for recording information (56) which is associated with the execution of the application program (58).

24. System according to one of claims 13 - 23, wherein the communications link (15; 53) is a secure link (59).

25. System according to claim 13, wherein the gravimetric measuring instrument (4, 12, 14) contains a memory for storage of an application program (58) as well as a processor for execution of the application program (58) and with means which enable the computer (11) to:
i. monitor the execution of the application program (58),
ii. verify during execution of the application program (58) whether execution of the application program (58) takes place according to a prescribed rule-set (60),
iii. interrupt execution of the application program (58) if a violation of the rules of the prescribed rule-set, or a non-compliance with the prescribed rule-set (60), is detected.

26. System according to Claim 25, wherein the rule-set (60) is an implementation of a standard, or of a legal regulation.

27. System according to Claim 26, wherein the legal regulation is a US Code of Federal Regulations, or an adaptation of the same.

28. System according to one of claims 25 - 27, wherein the gravimetric measuring instrument (4, 12, 14) contains means of validation which ensure that only such application programs (52; 58) are executable which fulfill the rule-set (60) and/or are released by the computer (11) for use.

29. System according to one of claims 25 - 28, wherein the application program (52; 58) takes the form of an application or an applet.

30. System according to one of claims 25 - 29, wherein the application program (52; 58) is defined as a measurement process which can be executed on the measuring instrument (4 , 12, 14).

31. Software (7) for use in a computer (11) to enable creation of an application program which is executable on a gravimetric measuring instrument (4, 12, 14), wherein the computer (11) when executing the software (7) aids execution of the following steps:
- Representation of several application modules (31.1 - 31.12) on a display device (9),
- Selection of a first application module (31.4),
- Selection of a second application module (31.8),
- Linking the first application module (31.4) to the second application module (31.8) to define a link (41.1) which determines a chronological sequence of the first application module (31.4) and of the second application module (31.8),
- Conversion of the selected application modules and of the link into an application program,
- Validation of the application program by application of a prescribed rule-set (60), wherein
i. the application program (52) is released for use if the validation is successfully completed, or
ii. computer-aided adaptation of the application program with renewed computer-aided validation is made possible if the validation was not successful.

32. Software according to Claim 31, wherein on a display device (9) of the computer (11) a graphical user interface (30) is represented which contains a worktop (33) which allows the application modules (31.1 - 31.12) to be moved and positioned by means of an input device, wherein the application modules (31.1 - 31.12) are preferably represented as graphical elements.

33. Software according to one of claims 31 or 32, wherein the rule-set (60) is an implementation of a standard, or of a legal regulation.

34. Software according to claim 33, wherein the legal regulation is a US Code of Federal Regulations or an adaptation of the same.

35. Software according to one of claims 31 - 34, wherein the validation is executed in such manner that only such application programs as fulfill the rule-set are released for use.

36. Software according to one of claims 31 - 35, wherein the software provides to the gravimetric measuring instrument (4, 12, 14) via a data carrier or a network (15; 50) an application program which is released for use.

## Revendications

1. Procédé pour l'établissement assisté par ordinateur d'un programme d'application, qui peut être exécuté sur un instrument de mesure gravimétrique (4, 12, 14), un ordinateur (11) comprenant un dispositif d'affichage (9) et un dispositif d'entrée (8) étant utilisé pour l'élaboration du programme d'application, et le procédé comprenant les étapes suivantes :
- présentation de plusieurs modules d'application (31.1 - 31.12) sur le dispositif d'affichage (9),
- sélection d'un premier module d'application (31.4) au moyen du dispositif d'entrée (8),
- sélection d'un second module d'application (31.8) au moyen du dispositif d'entrée (8),
- association du premier module d'application (31.4) avec le second module d'application (31.8) au moyen du dispositif d'entrée, afin de définir une association (41.1) qui définit une succession dans le temps du premier module d'application (31.4) et du second module d'application (31.8),
- conversion assistée par ordinateur des modules d'application sélectionnés et de l'association dans un programme d'application,
- validation assistée par ordinateur du programme d'application avec application d'un ensemble de règles prédéfini (60),
i. le programme d'application (52) étant autorisé pour l'utilisation si la validation s'est terminée avec succès, ou
ii. une adaptation assistée par ordinateur du programme d'application avec une validation renouvelée et assistée par ordinateur est rendue possible si la validation n'a pas réussi.

2. Procédé selon la revendication 1, une interface utilisateur (30) graphique étant représentée sur le dispositif d'affichage (9), qui comprend une surface de travail (33), laquelle permet de déplacer et de positionner des modules d'application (31.1 - 31.12), qui sont présentés de préférence sous forme d'éléments graphiques, au moyen d'un dispositif d'entrée, en particulier une souris d'ordinateur.

3. Procédé selon la revendication 2, au moins l'un des modules d'application présentant une interface pour le transfert ou pour la mise à disposition de données, qui est représenté graphiquement sous la forme d'interface de préférence sur l'élément graphique correspondant de ce module d'application.

4. Procédé selon la revendication 3, l'interface représentée graphiquement pouvant être associée lors de l'association au moyen d'un dispositif d'indication, de préférence au moyen d'une souris d'ordinateur, avec une autre interface représentée graphiquement, ou avec un autre élément graphique.

5. Procédé selon l'une quelconque des revendications précédentes, sachant qu'il s'agit en ce qui concerne de l'ensemble de règles (60) d'une application d'un standard, d'une norme ou d'une prescription légale.

6. Procédé selon la revendication 5, avec lequel il s'agit en ce qui concerne la prescription légale d'un U.S. Code of Federal Regulations ou d'une variation de celui-ci.

7. Procédé selon l'une quelconque des revendications précédentes, pour lequel la validation est effectuée de telle sorte que seuls des programmes d'application qui répondent à l'ensemble de règles sont autorisés pour l'utilisation.

8. Procédé selon l'une quelconque des revendications précédentes, pour lequel un programme d'application, qui est autorisé pour l'utilisation, est amené par un support de données ou par un réseau (15 ; 50) à l'instrument de mesure (4, 12,14) gravimétrique.

9. Procédé selon l'une quelconque des revendications précédentes, pour lequel on peut définir dans une étape pour au moins l'un des modules d'application des paramètres qui ont une incidence sur le mode de travail et/ou la fonction du module d'application correspondant.

10. Procédé selon l'une quelconque des revendications précédentes, pour lequel le procédé comprend les étapes supplémentaires suivantes :
- exécution du programme d'application,
- contrôle du programme d'application pendant que celui-ci est exécuté,
- contrôler si l'exécution du programme d'application s'effectue l'ensemble de règles prédéfini,
- interruption ou ramification de l'exécution du programme d'application si une infraction aux règles de l'ensemble de règles prédéfini ou un non-respect de l'ensemble de règles prédéfini est détecté.

11. Procédé selon la revendication 10, le procédé comprenant au moins l'une des étapes supplémentaires suivantes :
- documentation si une infraction aux règles de l'ensemble de règles prédéfini ou un non-respect de l'ensemble de règles (60) prédéfini a été détecté,
- consignation de l'exécution du programme d'application.

12. Procédé selon la revendication 10, par lequel les étapes supplémentaires suivantes sont exécutées lors du contrôle de programme d'application pendant son exécution :
- contrôle répété pour savoir si les associations entre les modules d'application existent ou sont interrompues,
- si une telle association est interrompue,
i. exécution d'un essai de restauration (Recovery), ou
ii. interruption de l'exécution du programme d'application jusqu'à ce que l'association correspondante soit de nouveau présente.

13. Système comprenant
- un module de logiciel (7),
- un ordinateur (11) pour l'établissement assisté par ordinateur d'un programme d'application (58), l'ordinateur (11) comprenant le module de logiciel (7), un dispositif d'affichage (9) et un dispositif d'entrée (8),
- un instrument de mesure gravimétrique (4, 12, 14) pour l'exécution du programme d'application (58), et
- une liaison de communication (15 ; 53), par laquelle l'ordinateur (11) peut être relié à l'instrument de mesure (4, 12, 14),
les étapes suivantes pouvant être exécutées par l'ordinateur (11) lors de l'exécution du module de logiciel (7) ;
- présentation de plusieurs modules d'application (31.1 - 31.12) sur le dispositif d'affichage (9),
- assistance du choix d'un premier module d'application au moyen du dispositif d'entrée (8),
- assistance du choix d'un second module d'application au moyen du dispositif d'entrée (8),
- assistance de l'association du premier module d'application avec le second module d'application au moyen du dispositif d'entrée (8), afin de définir une association (41.1 - 41.8) qui définit une succession chronologique du premier module d'application et du second module d'application,
- conversion des modules d'application choisis et de l'association en un programme d'application (50),
- validation du programme d'application (50) avec l'application d'un ensemble de règles (60) prédéfini,
i. le programme d'application (52) étant autorisé pour l'utilisation, si la validation a été effectuée avec succès, ou
ii. une adaptation assistée par ordinateur du programme d'application (50) étant rendue possible avec une nouvelle validation assistée par ordinateur, si la validation n'a pas été réussie.

14. Système selon la revendication 13, une interface utilisateur (30) graphique pouvant être représentée par le module de logiciel (7) sur le dispositif d'affichage (9), laquelle interface comprend une surface de travail (33) qui permet de déplacer et de positionner les modules d'application (31.1 - 31.12), qui sont représentés de préférence sous la forme d'éléments graphiques, au moyen d'un dispositif d'entrée.

15. Système selon l'une quelconque des revendications 13 ou 14, l'ordinateur (11) pouvant être relié à une mémoire dans laquelle est prédéfini un ensemble de règles (60), dans lequel il s'agit en ce qui concerne l'ensemble de règles (60) d'une mise en pratique d'un standard, d'une norme ou d'une prescription légale.

16. Système selon la revendication 15, dans lequel il s'agit en ce qui concerne la prescription légale d'un U.S. Code of Federal Regulations ou d'une modification de celui-ci.

17. Système selon l'une quelconque des revendications 13 ou 16, dans lequel la validation peut être réalisée de telle sorte qu'on autorise pour l'utilisation uniquement les programmes d'application (52) qui répondent à l'ensemble de règles (60).

18. Système selon l'une quelconque des revendications 13 à 17, dans lequel un programme d'application (52 ; 58), qui est autorisé pour l'utilisation, peut être amené par un support de données ou par le dispositif de communication (15; 53) à un instrument de mesure (4, 12, 14) gravimétrique.

19. Système selon l'une quelconque des revendications 13 à 18, le système comprenant des moyens de contrôle (57), qui permettent :
- de contrôler l'exécution du programme d'application (58),
- de contrôler pendant l'exécution du programme d'application (58) si l'exécution du programme d'application (58) s'effectue selon l'ensemble de règles prédéfini (60),
- d'interrompre l'exécution du programme d'application (58) ou de mettre en oeuvre une ramification si une infraction aux règles de l'ensemble de règles prédéfini ou un non-respect de l'ensemble de règles (60) prédéfini est détecté.

20. Système selon l'une quelconque des revendications 13 à 19, le système comprenant des moyens de documentation (55, 56) qui permettent de consigner si une infraction aux règles de l'ensemble de règles prédéfini ou un non-respect de l'ensemble de règles (60) prédéfini a été détecté.

21. Système selon l'une quelconque des revendications 13 à 20, le système comprenant d'autres moyens de documentation qui consignent en permanence l'exécution du programme d'application.

22. Système selon l'une quelconque des revendications 13 à 21, le système comprenant d'autres moyens de contrôle qui permettent de contrôler de façon répétée si les associations entre les modules d'application existent ou sont interrompues, et - si une telle association est interrompue - déclencher l'exécution d'une tentative de restauration (Recovery) ou d'interrompre une autre exécution du programme d'application jusqu'à ce que l'association correspondante existe à nouveau.

23. Système selon l'une quelconque des revendications 13 à 22, le système comprenant un moyen de stockage, de préférence une banque de données (55) relationnelle, qui peut être relié à l'instrument de mesure (4, 12, 14), le moyen de stockage servant de moyen d'enregistrement pour l'information (56), qui est en rapport avec l'exécution du programme d'application (58) .

24. Système selon l'une quelconque des revendications 13 à 23, pour lequel il s'agit en ce qui concerne la liaison de communication (15 ; 53) d'une liaison (59) sûre.

25. Système selon la revendication 13, dans lequel l'instrument de mesure (4, 12, 14) gravimétrique présente une mémoire pour le stockage d'un programme d'application (58) et un processeur pour l'exécution du programme d'application (58) et est doté de moyens qui permettent à l'ordinateur (11) :
i. de contrôler l'exécution du programme d'application (58),
ii. de contrôler pendant l'exécution du programme d'application (58) si l'exécution du programme d'application (58) s'effectue selon un ensemble de règles (60) prédéfini,
iii. d'interrompre l'exécution du programme d'application (58) si une infraction aux règles de l'ensemble de règles prédéfini ou un non-respect de l'ensemble de règles (60) prédéfini est détecté par l'ordinateur (11).

26. Système selon la revendication 25, dans lequel il s'agit en ce qui concerne l'ensemble de règles (60) d'une mise en pratique d'un standard, d'une norme ou d'une prescription légale.

27. Système selon la revendication 26, dans lequel il s'agit en ce qui concerne la prescription légale d'un U.S. Code of Federal Regulations ou d'une modification de celui-ci.

28. Système selon l'une quelconque des revendications 25 à 27, dans lequel l'instrument de mesure gravimétrique comprend des moyens de contrôle qui garantissent que seuls les programmes d'application (52 ; 58) qui répondent à l'ensemble de règles (60) et/ou qui sont autorisés pour l'utilisation par l'ordinateur (11), peuvent être exécutés.

29. Système selon l'une quelconque des revendications 25 à 28, le programme d'application (52 ; 58) étant conçu comme application ou comme applet.

30. Système selon l'une quelconque des revendications 25 à 29, le programme d'application (52 ; 58) définissant une séquence de mesure qui peut être réalisée sur l'instrument de mesure (4, 12, 14).

31. Logiciel (7) pour l'utilisation dans un ordinateur (11), afin de pouvoir établir un programme d'application du module qui peut être exécuté sur un instrument de mesure (4, 12, 14) gravimétrique, l'ordinateur (11) supportant l'exécution des étapes suivantes lors de l'exécution du logiciel (7) :
- présentation de plusieurs modules d'application (31.1 - 31.12) sur un dispositif d'affichage (9),
- sélection d'un premier module d'application (31.4),
- sélection d'un second module d'application (31.8),
- association du premier module d'application (31.4) avec le second module d'application (31.8) afin de définir une association (41.1) qui définit une succession dans le temps du premier module d'application (31.4) et du second module d'application (31.8),
- conversion des modules d'application sélectionnés et de l'association en un programme d'application,
- validation du programme d'application avec l'application d'un ensemble de règles prédéfini (60),
i. le programme d'application (52) étant autorisé pour l'autorisation dans le cas où la validation s'est terminée avec succès, ou
ii. une adaptation assistée par ordinateur du programme d'application avec une nouvelle validation assistée par ordinateur est rendue possible si la validation n'a pas été réussie.

32. Logiciel selon la revendication 31, une interface utilisateur (30) graphique étant représentée sur un dispositif d'affichage (9) de l'ordinateur (11), laquelle interface comprend une surface de travail (33), qui permet de déplacer et de positionner les modules d'application (31.1 - 31.12) au moyen d'un dispositif d'entrée, les modules d'application (31.1 - 31.12) étant représentés de préférence sous la forme d'éléments graphiques.

33. Logiciel selon l'une quelconque des revendications 31 ou 32, avec lequel il s'agit en ce qui concerne l'ensemble de règles (60) d'une réalisation d'un standard, d'une norme ou d'une prescription légale.

34. Logiciel selon la revendication 33, pour lequel il s'agit en ce qui concerne la prescription légale d'un U.S. Code of Federal Regulations ou d'une modification de celui-ci.

35. Logiciel selon l'une quelconque des revendications 31 à 34, la validation étant effectuée de telle sorte que seuls des programmes d'application qui répondent à l'ensemble de règles sont autorisés pour l'utilisation.

36. Logiciel selon l'une quelconque des revendications 31 à 35, le logiciel amenant un programme d'application, qui est autorisé pour l'utilisation, par un support de données ou un réseau (15 ; 50) à l'instrument de mesure (4, 12, 14) gravimétrique.
